# EUROPEAN PATENT SPECIFICATION

(11) **EP 2 666 396 B1**
(45) Date of publication and mention of the grant of the patent: **20.01.2016**
(21) Application number: 13168450.8
(22) Date of filing: 20.05.2013
(51) Int. Cl.: A47J 31/52, A47J 31/44, A47J 31/56, A47J 39/00, A47B 88/04, A47B 88/12

(54) **Ward trolley**
Visitenwagen
Chariot de service

(30) Priority: 23.05.2012 GB 201209059
(43) Date of publication of application: 27.11.2013
(73) Proprietor: Refreshment Systems Ltd, Bradford, Yorkshire BD4 7HN (GB)
(72) Inventor: Balmforth, Alistair, Bradford, Yorkshire BD4 7HN (GB); Shaw, Paul, Bradford, Yorkshire BD4 7HN (GB)
(74) Representative: Appleyard Lees

(56) References cited:
- WO-A1-92/06617
- WO-A1-2008/052276
- WO-A2-2011/030314
- CH-A2- 699 674
- US-A- 4 739 898
- US-A- 5 038 959
- US-A- 5 901 635

## Description

This invention relates to a ward trolley, particularly, but not limited to, a trolley for dispensing food and drinks for use in a hospital.

A ward trolley is used in a hospital to dispense drinks and snacks to patients in the hospital by wheeling the trolley around the wards of the hospital to provide the food and drink to individual patients.

Some of the main requirements of ward trolleys are that they must be easy to clean for hygiene purposes, which are of particular importance in a hospital situation, where the infection risk is higher than in other places. Also, the efficient use of the ward trolley is important in order to keep the operating costs of such a device as low as possible, given the current interest in cost cutting.

Document CH699674A2 describes a service wagon for servicing wards comprising a drinks dispensing machine and a food storage section, wherein the drinks dispensing machine incorporates a boiler for providing hot drinks.

It is an object of the present invention to address the issues identified above.

According to the present invention there is provided an apparatus and method as set forth in the appended claims. Other features of the invention will be apparent from the dependent claims, and the description which follows.

According to a first aspect of the present invention, there is provided a ward trolley incorporating a drinks dispensing machine and a food storage section, wherein the drinks dispensing machine incorporates a boiler section for providing heated water for drinks, the drinks dispensing machine being operable to calculate and display an amount of time remaining until the drinks dispensing machine is ready for use, wherein the drinks dispensing machine further includes a top cover section, which includes a water guiding element that protrudes downwards to cause condensation on the bulge section to propagate to an apex or lowest part of the water guiding element.

According to a second aspect of the present invention, there is provided a ward trolley incorporating a drinks dispensing machine and a food storage section, wherein the drinks dispensing machine incorporates a boiler section for providing heated water for drinks, and a water reservoir of the boiler section includes a recessed upper section adapted to direct water that has fallen onto the upper section, but has missed a filling opening in the upper section, into the water reservoir.

According to a third aspect of the present invention, there is provided a ward trolley incorporating a drinks dispensing machine and a food storage section, wherein the drinks dispensing machine incorporates a boiler section for providing heated water for drinks, and a water reservoir of the boiler section incorporates a closure for the filling opening, which closure incorporates a recessed top part to receive water falling onto the closure and to direct that water into an opening in the closure.

According to a fourth aspect of the present invention, there is provided a ward trolley incorporating a drinks dispensing machine and a food storage section, the food storage section incorporating drawer runners in the form of slots, the drawer runners being adapted to be dismantled for cleaning.

In any of the above aspects, the amount of time remaining until the drinks dispensing machine is ready for use may be a time until the boiler section is up to temperature.

The calculation of the amount of time remaining may be based on one or more of a current temperature of water in the boiler section, an amount of current being drawn by a heating element of the boiler section and a volume of the boiler section or a volume of water in the boiler section.

The drinks dispensing machine may be operable to display that a level of water in the boiler section is low, which may be an indication that the boiler should be filled.

A water reservoir of the boiler section may include a recessed upper section adapted to direct water that has fallen onto the upper section, but has missed a filling opening in the upper section, into the water reservoir.

The water reservoir may incorporate a closure for the filling opening, which closure may incorporate a recessed top part to receive water falling onto the closure and to direct that water into an opening in the closure.

The bulge section of the top cover is preferably located above the closure.

The food storage section may incorporate drawer runners, which may be in the form of slots. The slots may be adapted to be dismantled for cleaning. The slots may be formed by nesting sections, which may be U-shaped nesting sections. An inner of two U-shaped nesting sections may be removable for cleaning. The nesting sections may be secured to side walls, or intermediate side walls, of the food storage section. The inner U-shaped section may form a lower edge of an upper slot and an upper edge of a lower slot, with an outer U-shaped section forming an upper edge of an upper slot and a lower edge of a lower slot. Preferably, two nesting U-shaped sections are formed on each side of a shelving bay to form slots at left and right sides of the shelving bay. Preferably, the two pairs form slots for two drawers. A second set of two pairs may be provided to form slots for two further drawers. The shelving section may include two or more, preferably three, shelving bays.

For a better understanding of the invention, and to show how embodiments of the same may be carried into effect, reference will now be made, by way of example, to the accompanying diagrammatic drawings in which:

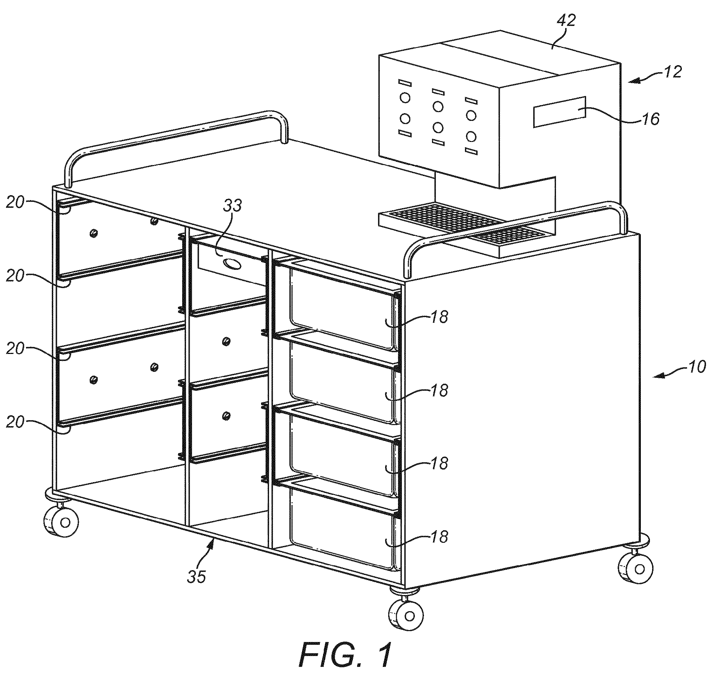

Figure 1 is a schematic perspective view of a ward trolley according to the present invention;
Figure 2 is a partial schematic front view of a shelving system of the ward trolley;
Figure 3 is a schematic partial view in a partially exploded form of a shelving element of the trolley; and
Figure 4 is a partial schematic cross-sectional view of a water tank and lid of a boiler of a drinks dispenser of the ward trolley.

A ward trolley 10 comprises a drinks dispensing machine 12 and a shelving section 14, which carries multiple drawers 18 for snacks or materials for producing drinks, such as tea and coffee etc.

The issues mentioned in the introduction in relation to efficiency of working and hygiene, are of particular importance in relation to ward trolleys compared to other fields. For example, in the field of drinks dispensers, the efficiency of use is less relevant, because commercial rates are charged for drinks provided by drinks dispensing machines and the machine is typically operated automatically, rather than by a person dispensing the drinks, the latter being the case with a ward trolley.

In terms of hygiene, there are particularly important rules and factors to take into account when a ward trolley 10 is moved around a hospital environment, with the paramount importance being the reduction of the spread of infection throughout the hospital. Of course the use of a ward trolley which is moved between wards is of particular relevance in this situation.

Consequently in order to address the efficiency issue, the drinks dispensing machine 12 is provided with a display 16. The display 16 is programmed to display to a worker the amount of time that will elapse before the drinks machine is ready for dispensing. This is of particular relevance when a worker must operate the drinks dispensing machine on the ward trolley by a tightly controlled schedule to ensure that patients receive the seven drinks a day that they are required to be provided with for health reasons. Thus, an operative could derive great benefit from knowing how long the machine will take to be usable so that other aspects of the ward trolley 10 can be prepared, for example stocking up the shelving section 14 with the relevant food and drink related items.

The amount of time required for the drinks dispensing machine 12 to be in service is based on calculations relating to the amount of heating achieved in the first 3 minutes of the boiler being switched on. This information is used to extrapolate the amount of heating time that will be required to get up to temperature. Also previous timings can be used and stored in the software controlling the display 16 to count down to the time when the drinks dispensing machine 12 will be ready for use. A suitable temperature for water in the boiler may typically be 82°C for drinks that are provided in a plastic cup. China or pottery cups can be used with hotter water, for example 92°C.

The display 16 provides additional functionality, including an indication to a user when the boiler of the drinks dispensing machine 12 needs to be filled, using signals from a level indicator in the boiler. There is also a temperature display and also a display indicating that the boiler is being heated. All of these displays may cycle, by showing each of the pieces of information for a number of seconds consecutively.

The provision of the count down timer, i.e. the time until the drinks dispenser machine 12 will be ready for use is of particular importance in relation to the efficient use of the ward trolley 10 described herein.

Another beneficial aspect of the ward trolley 10 described herein is the arrangement of the shelving system.

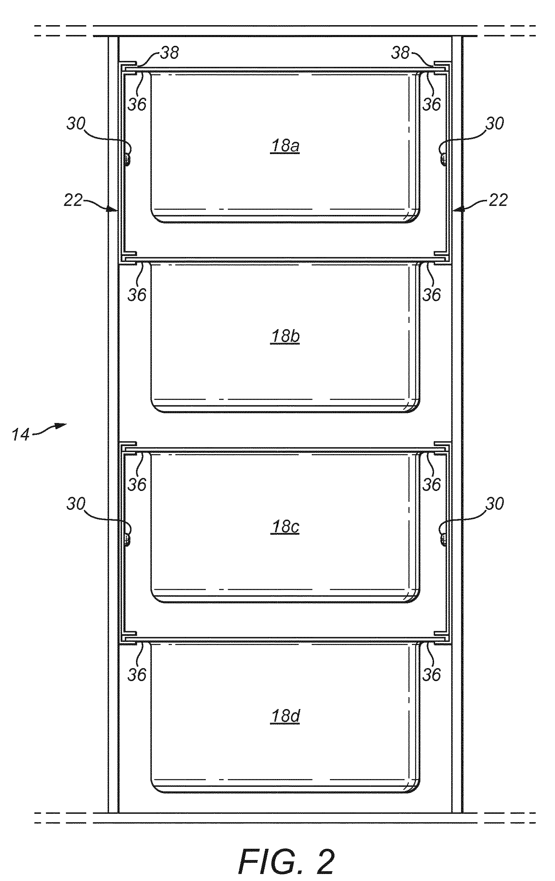

As seen in Figure 2, multiple drawers 18 are provided on runners 20 that are described in more detail in the following section. The drawers 18 are used as mentioned above for carrying food and drink related items. The drawers 18 may include a cereal dispenser, which is shaped like a baking tray with openings in a centre section thereof to receive containers for breakfast cereals and the like. The cereal dispenser is inserted in the runners 20 like a drawer and the cereal containers hang through the openings.

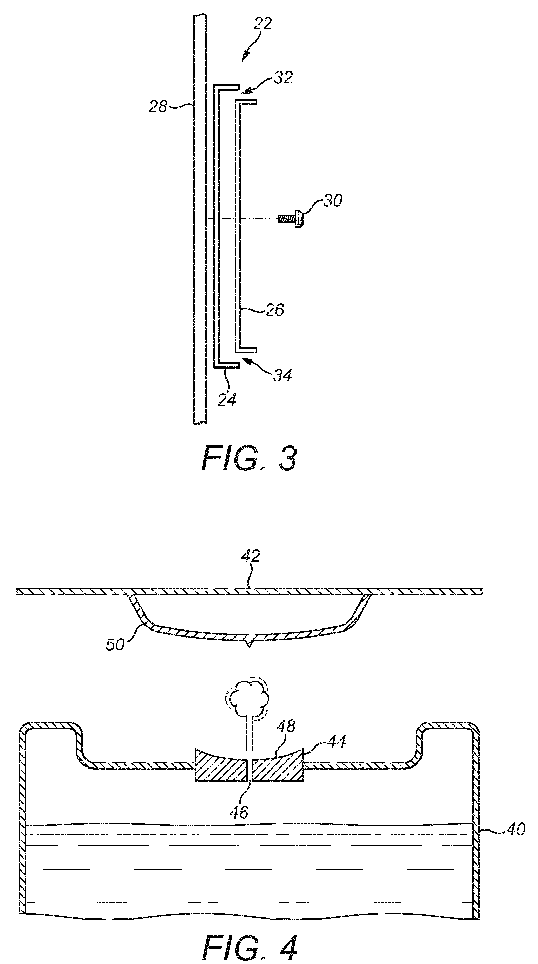

The arrangement of the runners 20 is shown in more detail in Figure 3, as well as Figure 2.

A top drawer 18a and seond drawer 18b are supported by a runner assembly 22, which comprises two sets of an outer U-shaped section 24 and an inner U-shaped section 26 . The outer U-shaped section 24 is secured to a sidewall 28 of the shelving section 14 by a fixing 30. The inner U-shaped section 26 fits within the outer U-shaped section 24 to provide an upper channel 32 and a lower channel 34. The fixing is received in an opening in the inner U-shaped section 26.

As can be seen in Figure 3 the upper channel 32 and the lower channel 34 are formed to receive extended side flanges 36 (see Figure 2) of the drawers 18. The arrangement is repeated so that there are two pairs of inner and outer U-shaped members 24, 26, one above the other receiving third and fourth drawers 18c, 18d..

The outer U-shaped section 24 is secured to the side wall 28 by welding or other more permanent fixing means. The fixing 30 is used to removably secure the inner U-shaped section 26 to the outer U-shaped section 24.

The removable nature of the inner U-shaped section 26 is particularly advantageous in relation to hygiene. The reason for this is that the upper channel 32 and the lower channel 34 are relatively narrow for receiving the flanges 36 of the drawers 18b and 18c. With the narrowness of the channels, which are likely to be narrower than a user's finger, it is difficult to clean the channel and the risk of spreading infection rises when it is difficult to clean part of a piece of equipment. Thus, for cleaning a user can simply remove the fixing 30, which is typically a screw and remove the inner U-shaped section 26 to open up the channels 32 and 34 and thereby allow easy cleaning of the parts of the shelving section which would have otherwise have been difficult to clean.

An additional advantage of the shelving section 14 described above is that in the U-shaped pieces 24 and 26 can be used to provide different widths of channels 32 and 34. For example, when a cash box is needed in the ward trolley, the position of the cash box can be moved with the modular system described herein, because it is easy to change the configuration of the shelving section 14 to allow for a differently shaped cash box to the drawers 18 described above. A cash box 33 can be fitted in a central bank 35 of drawers, as can knife drawers, cereal dispensers. These can be fitted on typically kitchen drawer runners that can be secured to the inner U-shaped section 26. Also, a cash box could fitted in the outer U-shaped section 24 alone without the need for the inner U-shaped section 26. The cash box could be secured could be more permanently fixed to a top section of the ward trolley to deter thieves.

In addition, the flexible nature of the arrangement of shelving allows for different elements to be located in different parts, for example cutlery drawers, cereal drawers etc can be moved more easily in the flexible setup described herein. In the figures two sets of shelving are shown side by side. Another embodiment incorporates three sections with a narrower central section, which may accommodate a cash box for example.

Figure 4 shows an additional section of the drinks dispensing machine, in particular it provides a cross-section through a boiler 40 and also shows a lid section 42 of the drinks dispenser machine 12. The boiler 40 incorporates a removable lid 44 which must by law have an opening 46 to allow the escape of steam therefrom. The requirement for an opening 46 provides issues in relation to the control of moisture within the cover 42 of the drinks dispensing machine 12. Therefore, a dished section 48 has been provided in the lid 44 and a domed section 50 above the lid 44 has been provided on the cover section 42. The use of these elements is described below.

A problem is encountered with boilers of the type described herein in that steam must be able to escape through the opening 46 and into the housing of the drinks dispensing machine 12. The condensation of this water on the surfaces, for example on the lid 42, must be controlled in some way, otherwise the moisture can become problematic, particularly in the presence of electrical connections. The solution employed in the present invention is to provide a dished section 48 in the lid 44 so that any moisture dripping back on to the lid 44 is guided towards the opening 46 and drips back into the boiler 40. In addition, the domed section 50 is domed downwards towards the lid 44 and any moisture condensing on the lid 42 typically on the inside therefore, would naturally drip towards the centre of the domed section 50 which is located above the opening 46 and so can drip from the domed section 50 of the lid 42 onto the dished section 48 of the lid 44 and back though the opening 46 into the boiler 40. The domed section 50 may be formed as a bracket secured to a main part of the lid section 42. Thus, effective management of the condensation and moisture coming from the boiler is achieved with the system described herein.

As can be seen from the ward trolley described herein significant advantages are achieved in relation to ward trolleys, which would not be derived from related fields which do not have the same requirements of efficiency of use and hygiene that are required in the ward trolley 10 described herein.

## Claims

1. A ward trolley (10) incorporating a drinks dispensing machine (12) and a food storage section (14), wherein the drinks dispensing machine (12) incorporates a boiler section (40) for providing heated water for drinks, the drinks dispensing machine (12) being operable to calculate and display an amount of time remaining until the drinks dispensing machine (12) is ready for use, **characterised in that** the drinks dispensing machine (12) includes a top cover section (42), which includes a water guiding element (50) that protrudes downwards to cause condensation on the bulge section to propagate to an apex or lowest part of the water guiding element (50).

2. A ward trolley (10) as claimed in claim 1, in which the amount of time remaining until the drinks dispensing machine (12)is ready for use is a time until the boiler section (40) is up to temperature.

3. A ward trolley (10) as claimed in claim 1 or claim 2, in which the calculation of the amount of time remaining is based on one or more of a current temperature of water in the boiler section (40), an amount of current being drawn by a heating element of the boiler section (40) and a volume of the boiler section (40) or a volume of water in the boiler section (40).

4. A ward trolley (10) as claimed in any preceding claim, in which the drinks dispensing machine is operable to display that a level of water in the boiler section (40) is low.

5. A ward trolley (10) as claimed in any preceding claim, in which a water reservoir of the boiler section (40) includes a recessed upper section adapted to direct water that has fallen onto the upper section, but has missed a filling opening (46) in the upper section, into the water reservoir.

6. A ward trolley (10) as claimed in any preceding claim, in which the water reservoir incorporates a closure (44) for the filling opening (46), which closure incorporates a recessed top part (48) to receive water falling onto the closure (44) and to direct that water into an opening (46) in the closure (44).

7. A ward trolley as claimed in any preceding claim, in which the food storage section (14) incorporates drawer runners (20) in the form of slots.

8. Award trolley (10) as claimed in claim 7, in which the slots are adapted to be dismantled for cleaning.

9. A ward trolley (10) as claimed in claim 7 or claim 8, in which the slots are formed by nesting sections (24,26).

10. A ward trolley (10) as claimed in claim 9, in which the nesting sections (24,26) are secured to side walls, or intermediate side walls, of the food storage section (14).

11. A ward trolley (10) as claimed in claim 9 or claim 10, in which the nesting sections (24,26) comprise inner U-shaped sections (26) that form a lower edge of an upper slot and an upper edge of a lower slot, with an outer U-shaped section (24) forming an upper edge of an upper slot and a lower edge of a lower slot.

12. A ward trolley (10) as claimed in claim 11, in which two nesting U-shaped sections (24,26) are formed on each side of a shelving bay to form slots at left and right sides of the shelving bay.

13. A ward trolley (10) as claimed in claim 12, in which the two pairs form slots for two drawers (18).

14. A ward trolley (10) as claimed in claim 13, in which a second set of two pairs may be provided to form slots for two further drawers (18).

## Patentansprüche

1. Rollwagen für Krankenstationen (10), der einen integrierten Getränkeausgabeautomaten (12) und Lebensmittelaufbewahrungsbereich (14) aufweist, wobei der Getränkeausgabeautomat (12) einen integrierten Durchlauferhitzerbereich (40) zum Bereitstellen von erhitztem Wasser für Getränke aufweist, wobei der Getränkeausgabeautomat (12) dahingehend betreibbar ist, einen Betrag an Zeit zu berechnen und anzuzeigen, der verbleibt, bis der Getränkeausgabeautomat (12) zum Gebrauch bereit ist, **dadurch gekennzeichnet, dass** der Getränkeausgabeautomat (12) einen oberen Abdeckungsbereich (42) enthält, der ein Wasserführungselement (50) enthält, das in Abwärtsrichtung hervorragt, um zu bewirken, dass Kondensation am Auswölbungsbereich sich zu einem Scheitelpunkt oder niedrigsten Punkt des Wasserführungselements (50) ausbreitet.

2. Rollwagen für Krankenstationen (10) nach Anspruch 1, wobei es sich bei dem Betrag der verbleibenden Zeit, bis der Getränkeausgabeautomat (12) zum Gebrauch bereit ist, um eine Zeit handelt, bis der Durchlauferhitzerbereich (40) die Betriebstemperatur erreicht hat.

3. Rollwagen für Krankenstationen (10) nach Anspruch 1 oder 2, wobei die Berechnung des Betrags der verbleibenden Zeit auf einem oder mehreren der Folgenden basiert: einer derzeitigen Wassertemperatur im Durchlauferhitzerbereich (40), einer Menge an Strom, die von einem Heizelement des Durchlauferhitzerbereichs (40) verbraucht wird und einem Volumen des Durchlauferhitzerbereichs (40) oder einem Wasservolumen im Durchlauferhitzerbereich (40).

4. Rollwagen für Krankenstationen (10) nach einem der vorhergehenden Ansprüche, wobei der Getränkeausgabeautomat dahingehend betreibbar ist, anzuzeigen, dass ein Wasserpegel im Durchlauferhitzerbereich (40) niedrig ist.

5. Rollwagen für Krankenstationen (10) nach einem der vorhergehenden Ansprüche, wobei ein Wassertank des Durchlauferhitzerbereichs (40) einen eingelassenen oberen Bereich aufweist, der dazu ausgelegt ist, Wasser, das auf den oberen Bereich gefallen ist, jedoch eine Einfüllöffnung (46) im oberen Bereich verfehlt hat, in den Wassertank zu leiten.

6. Rollwagen für Krankenstationen (10) nach einem der vorhergehenden Ansprüche, wobei der Wassertank einen integrierten Verschluss (44) für die Einfüllöffnung (46) aufweist, wobei der Verschluss einen integrierten eingelassenen oberen Teil (48) aufweist, um auf den Verschluss (44) fallendes Wasser aufzunehmen und dieses Wasser in eine Öffnung (46) im Verschluss (44) zu leiten.

7. Rollwagen für Krankenstationen nach einem der vorhergehenden Ansprüche, wobei der Lebensmittelaufbewahrungsbereich (14) integrierte Schubladenführungen (20) in Form von Schlitzen aufweist.

8. Rollwagen für Krankenstationen (10) nach Anspruch 7, wobei die Schlitze dazu ausgelegt sind, zum Reinigen abmontiert zu werden.

9. Rollwagen für Krankenstationen (10) nach Anspruch 7 oder Anspruch 8, wobei die Schlitze durch verschachtelte Bereiche (24, 26) gebildet werden.

10. Rollwagen für Krankenstationen (10) nach Anspruch 9, wobei die verschachtelten Bereiche (24, 26) an Seitenwänden oder Zwischenseitenwänden des Lebensmittelaufbewahrungsbereichs (14) befestigt sind.

11. Rollwagen für Krankenstationen (10) nach Anspruch 9 oder Anspruch 10, wobei die verschachtelten Bereiche (24, 26) innere U-förmige Bereiche (26) umfassen, die eine untere Kante eines oberen Schlitzes und eine obere Kante eines unteren Schlitzes bilden, wobei ein äußerer U-förmiger Bereich (24) eine obere Kante eines oberen Schlitzes und eine untere Kante eines unteren Schlitzes bildet.

12. Rollwagen für Krankenstationen (10) nach Anspruch 11, wobei zwei verschachtelte U-förmige Bereiche (24, 26) auf jeder Seite eines Regalgestells gebildet sind, um auf der rechten und der linken Seite des Regalgestells Schlitze zu bilden.

13. Rollwagen für Krankenstationen (10) nach Anspruch 12, wobei die zwei Paare Schlitze für zwei Schubladen (18) bilden.

14. Rollwagen für Krankenstationen (10) nach Anspruch 13, wobei ein zweiter Satz von zwei Paaren vorgesehen sein kann, um Schlitze für zwei weitere Schubladen (18) zu bilden.

## Revendications

1. Chariot de service (10) intégrant un distributeur automatique (12) de boissons et une section (14) d'entreposage d'aliments, dans lequel le distributeur automatique (12) de boissons intègre une section de chaudière (40) pour fournir de l'eau chaude pour les boissons, le distributeur automatique (12) de boissons permettant de calculer et afficher le temps restant avant que le distributeur automatique (12) de boissons soit prêt à l'emploi, **caractérisé en ce que** le distributeur automatique (12) de boissons comprend une section supérieure de couvercle (42), qui comprend un élément (50) de guidage d'eau qui fait saillie vers le bas pour faire se propager la condensation sur la section renflée vers le sommet ou la partie la plus basse de l'élément (50) de guidage d'eau.

2. Chariot de service (10) selon la revendication 1, dans lequel le temps restant avant que le distributeur automatique (12) de boissons soit prêt à l'emploi est le temps jusqu'à ce que la section de chaudière (40) soit à la bonne température.

3. Chariot de service (10) selon la revendication 1 ou 2, dans lequel le calcul du temps restant repose sur une ou plusieurs températures en cours de l'eau dans la section de chaudière (40), la quantité de courant que consomme l'élément chauffant de la section de chaudière (40) et le volume de la section de chaudière (40) ou le volume d'eau dans la section de chaudière (40).

4. Chariot de service (10) selon l'une quelconque des revendications précédentes, dans lequel le distributeur automatique de boissons permet d'afficher que le niveau d'eau dans la section de chaudière (40) est bas.

5. Chariot de service (10) selon l'une quelconque des revendications précédentes, dans lequel le réservoir d'eau de la section de chaudière (40) comprend une section supérieure en retrait apte à diriger dans le réservoir d'eau l'eau qui est tombée sur la section supérieure mais a manqué une ouverture de remplissage (46) dans la section supérieure.

6. Chariot de service (10) selon l'une quelconque des revendications précédentes, dans lequel le réservoir d'eau comporte une fermeture (44) pour l'ouverture de remplissage (46), laquelle fermeture comporte une partie supérieure (48) évidée pour recevoir l'eau qui tombe sur la fermeture (44) et diriger cette eau dans une ouverture (46) dans la fermeture (44).

7. Chariot de service selon l'une quelconque des revendications précédentes, dans lequel la section (14) d'entreposage d'aliments comporte des glissières (20) de tiroir en forme de rainures.

8. Chariot de service (10) selon la revendication 7, dans lequel les rainures sont aptes à être démontées pour le nettoyage.

9. Chariot de service (10) selon la revendication 7 ou 8, dans lequel les rainures sont formées par des profilés (24, 26) qui s'emboîtent.

10. Chariot de service (10) selon la revendication 9, dans lequel les profilés (24, 26) qui s'emboîtent sont solidement fixés aux parois latérales ou aux parois latérales intermédiaires de la section (14) d'entreposage d'aliments.

11. Chariot de service (10) selon la revendication 9 ou 10, dans lequel les profilés (24, 26) qui s'emboîtent comprennent un profilé intérieur (26) en forme d'U qui constitue le bord inférieur d'une rainure supérieure et le bord supérieur d'une rainure inférieure, ainsi qu'un profilé extérieur (24) en forme d'U constituant le bord supérieur de la rainure supérieure et le bord inférieur de la rainure inférieure.

12. Chariot de service (10) selon la revendication 11, dans lequel deux profilés (24, 26) en forme d'U qui s'emboîtent sont formés sur chaque côté d'une travée de rayonnage pour constituer des rainures sur les côtés gauche et droit de la travée de rayonnage.

13. Chariot de service (10) selon la revendication 12, dans lequel les deux paires constituent des rainures pour deux tiroirs (18).

14. Chariot de service (10) selon la revendication 13, dans lequel les deux paires peuvent être disposées pour constituer des rainures pour deux autres tiroirs (18).
